# EUROPEAN PATENT SPECIFICATION

(11) **EP 2 217 437 B1**
(45) Date of publication and mention of the grant of the patent: **29.08.2018**
(21) Application number: 08713298.1
(22) Date of filing: 28.01.2008
(51) Int. Cl.: B32B 17/10, E06B 3/67, C03C 17/36, G02F 1/1333

(54) **RUGGEDIZED SWITCHABLE GLAZING, AND/OR METHOD OF MAKING THE SAME**
VERSTÄRKTE SCHALTBARE VERGLASUNG UND/ODER HERSTELLUNGSVERFAHREN DAFÜR
VITRAGE INTERCHANGEABLE ROBUSTE, ET/OU SON PROCÉDÉ DE RÉALISATION

(30) Priority: 06.11.2007 US 979635; 26.11.2007 US 987005
(43) Date of publication of application: 18.08.2010
(73) Proprietor: Guardian Glass, LLC, Auburn Hills MI 48326 (US)
(72) Inventor: VEERASAMY, Vijayen, S., Ann Arbor MI 48103 (US)
(74) Representative: Hess, Peter K. G.
(86) International application number: PCT/US2008/001054
(87) International publication number: WO 2009/061329

(56) References cited:
- US-A- 4 532 181
- US-A- 4 883 721
- US-A- 5 539 552
- US-A- 5 837 361
- US-A- 6 055 088
- US-A1- 2002 068 167
- US-A1- 2003 150 711
- US-A1- 2003 224 182

## Description

### FIELD OF THE INVENTION

Certain example embodiments of this invention relate to ruggedized switchable glazings, and/or methods of making the same. More particularly, certain example embodiments relate to liquid crystal inclusive (e.g., PDLC) layers that are protected using, for example, low-E UV-blocking coatings, PVB and/or EVA laminates, and/or PET layers. Certain example embodiments advantageously reduce one or more problems associated with residual haze, color change, flicker, structural changes in the polymer and/or the LC (liquid crystal), degradations in state-switching response times, delamination, etc.

### BACKGROUND AND SUMMARY OF EXAMPLE EMBODIMENTS OF THE INVENTION

Polymer dispersed liquid crystals (PDLCs) typically are made by inducing phase separation in an initially homogeneous mixture of liquid crystal and monomers. Preparation of PDLCs involves a phase separation, which is conventionally triggered by polymerization of the monomer matrix by either UV or thermal curing, or even rapid evaporation of solvents. As the monomer polymerizes, the liquid crystal phase separates into microscopic droplets or domains or pockets surrounded by the walls of the cured polymer matrix, which provides a "backbone" to hold the LC. The mixture of cured polymer and LC are held together between two sheets of polyethylene (PET), often coated with transparent conducting oxides (TCOs) through which an electric field is applied. When unaddressed (e.g., when no voltage is applied), the nematic texture within the domains is randomly oriented with respect to the other neighboring domains, and the display appears whitish caused by the scattering of light.

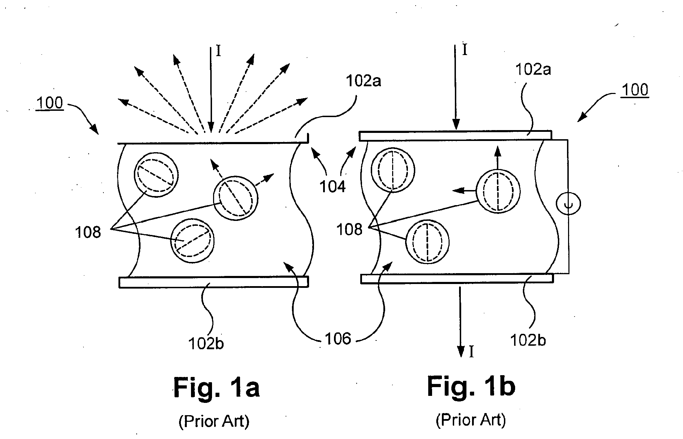

Fig. 1a is a conventional PDLC glass window 100 in an off state. Two glass substrates 102a, 102b are provided. A conductive coating 104 is applied to the inner surface of the outer substrate 102a (e.g., surface 2 of the window assembly). A plurality of liquid crystal (LC) droplets 108 are disposed within the polymer mixture 106. Because no voltage is provided, the droplets 108 are randomly oriented, and incident light I reflects off of them, causing the scattering of light in the directions shown by the dashed arrows.

In the addressed state, the nematic texture in different domains align with the electric field, thus allowing for a clear state. Fig. 1b is a conventional PDLC glass window 100 in an on state. Fig. 1b is similar to Fig. 1a, except that a voltage V is applied to the PDLC layer (e.g., to the conductive coating 104) via one or more bus bars (not shown). The voltage causes the liquid crystal droplets to align parallel to the electric field, allowing incident light I to pass through the window 100 in the clear state.

Popular uses of this technology include glass walls in offices, conference rooms, lobbies, store fronts, etc. Privacy glass sometimes is used by homeowners (e.g., in bathrooms, entryways, family rooms, bedrooms, skylights, etc.). The windows may be made to function on a standard voltage and may be connected to switches. Windows also may be connected to timers.

Unfortunately, although such techniques have represented an improvement in some windows, there still are certain drawbacks. Although the electric field dramatically reduces the scattering, there still exists scattering at the boundary of the liquid crystal and polymer, and scattering between neighboring drops. This contributes in part to a residual haze in the clear state. Another contribution to the residual haze in the clear state relates to the polyvinyl butyral (PVB) or ethylenevinyl acetate (EVA) used to laminate the PDLC to the glass.

Furthermore, as another example drawback of current PDLC techniques, such windows suffer from UV and solar-induced degradation of the PDLC layer, ultimately causing color change and/or flicker. As used herein, "UV" refers to light having a wavelength less than or equal to about 400 nm. More particularly, long-term exposure of the cured and laminated PDLC to ambient UV light exacerbates the haze values and causes a "browning" of the LC (although such values are material dependent, after about 3,000 hours of UV exposure, generally ΔE* > 2, with ΔE* being known as a value indicative of color and transmission change of light, where ΔE* = sqrt((ΔL*)²+(Δa*)²+(Δb*)²), with L* corresponding to the "lightness" of the color, a* corresponding to the color's position between red and green, and b* corresponding to the color's position between blue and yellow). Even though the PVB layer cuts off about 99% of the UV radiation below about 380 nm, a large portion of UVA (e.g., having a penetration depth of long wavelength UVA in the order of magnitude of PVB thickness) may still cause structural changes in both the polymer as well as the LC, making determining the size of the droplets, and hence the scattering function, difficult and susceptible to change. As used herein, "UVA" refers to light having a wavelength from about 320 nm to about 400 nm. The UV also may degrade and/or fade the colored PVB layers. This susceptibility to degradation and/or fading is true for dye-based PVB, as well as in pigment-based PVB.

The degradation is exacerbated with temperature increases in the LCs. Because the thermal conductivity of the PVB, PET, and/or LC is low, radiation causes thermal runaways if samples are left exposed to the sun for relatively long periods of time.

Another degradation of PDLC performance relates to the switching times of the LC as its exposure to UV and heat increases. Response time essentially is a function of the sum of the time on and time off (Ton + Toff). Initially, the response time of the device is just under about 20 ms, which corresponds to a frequency of about 100 Hz. This frequency is well above 25 Hz, which is generally regarded as the frequency at which the human eye can perceive flicker. However, after about 1,000 hours of QUV accelerated weathering, the response time may climb above about 40 ms, which may make flicker noticeable to the human eye.

Still another set of problems relates to delamination. Currently, curved laminates with sharp edges are susceptible to delamination in and/or proximate to high-stress hot-spots.

In US 6,055,088 a glazing is described, which includes at least one active layer and at least one reflecting coating on the active layer.

US 4,883,721 discloses a multi-layer of thin film for application to a transparent substrate such as glass provides excellent visible light transmission while controlling both near-infrared solar energy and far-infrared reflected energy.

Thus, it will be appreciated that there is a need in the art for coated articles that overcome one or more of these and/or other disadvantages. It also will be appreciated that there is a need in the art for improved PDLC techniques (for use in, for example, vehicle windows, insulating glass (1G) window units, etc.).

The above mentioned problems are solved by a window (e.g., vehicle windshield, architectural window, or the like) according to claim 1, by an insulating glass window unit according to claim 6, as well as by a coated article according to claim 12.

Cancelled.

In certain example embodiments of this invention, a coated article and/or a method of making the same is/are provided. An inner substrate and an outer substrate are provided. The inner and outer substrates are substantially parallel to one another. A multi-layer low-E UV blocking coating is supported by an inner surface of the outer substrate. A liquid crystal inclusive layer is disposed between the inner and outer substrates. First and second transparent conductive layers are provided. The first and second transparent conductive layers are provided between the liquid crystal inclusive layer and the outer and inner substrates, respectively. First and second laminate layers are provided. The first laminate layer is for lamination to the outer substrate, and the second laminate layer is for lamination to the inner substrate. At least one bus bar is operably connected to the liquid crystal inclusive layer through the first and/or second transparent conductive layer(s) so as to cause the liquid crystal inclusive layer to become activated when a voltage is applied to the at least one bus bar. The multi-layer low-E UV blocking coating is arranged so that no more than about 20% of light having a wavelength of about 380-400 nm reaches the liquid crystal inclusive layer. The coated article has a visible transmission of from about 55-65% when the liquid crystal inclusive layer is activated.

The insulating glass unit has a visible transmission of from about 55-65% when the liquid crystal inclusive layer is activated.

In certain example embodiments of this invention, a coated article including a low-E UV blocking coating supported by a substrate and/or a method of making the same is/are provided. The low-E UV blocking coating comprises first and second IR reflecting layers comprising silver and/or gold, and a UV blocking layer that blocks light having a wavelength of about 380-400 nm so that no more than about 20% of such light penetrates the coating. The coated article has a visible transmission of at least about 55%.

In certain example embodiments of this invention, an insulating glass (IG) unit including a low-E UV blocking coating supported by a substrate and/or a method of making the same is/are provided. The low-E UV blocking coating comprises first and second IR reflecting layers comprising silver and/or gold, and a UV blocking layer that blocks light having a wavelength of about 380-400 nm so that no more than about 20% of such light penetrates the coating. The IG unit has a visible transmission of at least about 55%.

The features, aspects, advantages, and example embodiments described herein may be combined to realize yet further embodiments.

### BRIEF DESCRIPTION OF THE DRAWINGS

These and other features and advantages may be better and more completely understood by reference to the following detailed description of exemplary illustrative embodiments in conjunction with the drawings, of which:
FIGURE 1a is a conventional PDLC glass window in an off state;
FIGURE 1b is a conventional PDLC glass window in an on state;
FIGURE 2 is a cross-sectional view of a window in accordance with an example embodiment of this invention;
FIGURE 3 is a cross-sectional view of an insulating glass (IG) window unit in accordance with an example embodiment of this invention;
FIGURE 4 is a graph of experimental data that illustrates the general ineffectiveness of the PVB in containing the UVA incidence (the vertical axis of the graph represents percent transmission, and the horizontal axis of the graph represents wavelength in nm);
FIGURE 5 is a graph of experimental data that illustrates the advantages gained by ruggedizing the PDLC in accordance with an example embodiment (the vertical axis of the graph represents percent transmission, and the horizontal axis of the graph represents wavelength in nm);
FIGURE 6 is an example multi-layer low-E UV blocking coating that may be used in connection with certain example embodiments; and
FIGURE 7 is a comparative example multi-layer low-E UV blocking coating that may be used in connection with certain example embodiments.

### DETAILED DESCRIPTION OF EXAMPLE EMBODIMENTS OF THE INVENTION

Certain example embodiments provide PDLC windows using an effective blocking layer as well as a double or triple silver layer so as to reduce the incidence of the PDLC warming and therefore help to solve of one or more of the above-described and/or other problems associated with conventional PDLC techniques. The UV blocking layer preferably has at least about 99.5% UV cut-off below 410 nm. In certain example embodiments, the UV blocking layer is temperable. Certain example embodiments therefore may advantageously reduce one or more problems associated with residual haze, color change, flicker, structural changes in the polymer and/or the LC, degradations in state-switching response times, delamination, etc.

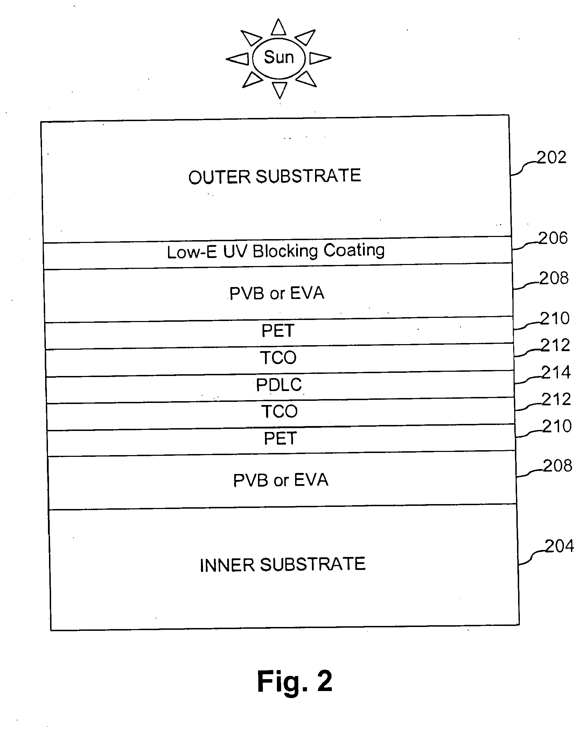

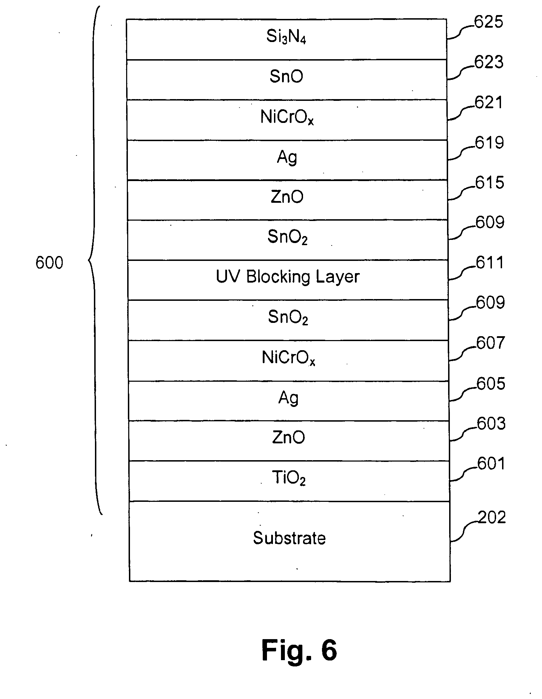

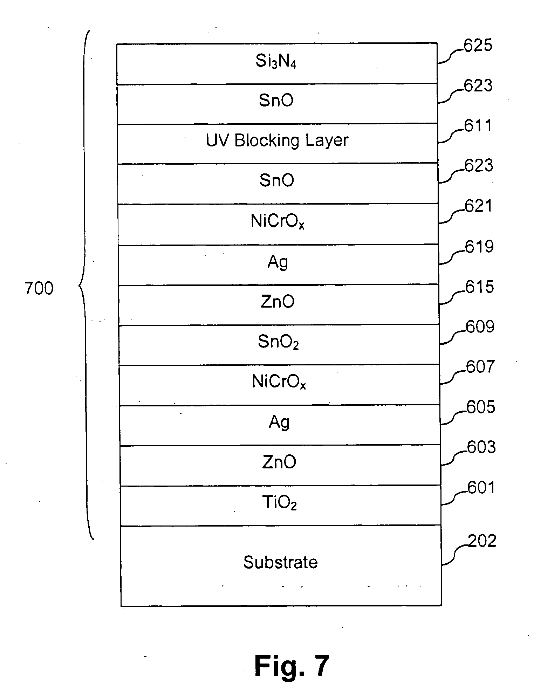

Fig. 2 is a cross-sectional view of a window in accordance with an example embodiment. In the window of Fig. 2, two substrates (e.g., glass substrates) are provided, including an outer substrate 202 and an inner substrate 204. A low-E UV blocker 206 is deposited on the inner surface of the outer substrate 202. The low-E coating 206 may be, for example, of the type disclosed in U.S. Patent Nos. 7,056,588 or 6,887,575, or Application Serial No. 11/281,598. The low-E coating 206 also may include one or more infrared reflecting (IR) layers in certain example embodiments. Furthermore, the low-E coating may include one or more UV blocking layers, or a separate UV blocking coating may be applied, e.g., proximate to one or more of the low-E coatings described above. Further details of an example low-E UV blocking layer are provided below, e.g., with reference to Figs. 6 and 7.

A first laminate layer 208 comprising a polymer-based material (e.g., PVB and/or EVA) is applied over the low-E UV blocking coating 206 proximate to surface 2 of the window. A second laminate layer 208 also comprising a polymer-based material (e.g., PVB and/or EVA) is applied on the inner surface of the inner substrate 204 (on surface 3 of the window). The first and second laminate layers 208 may be applied to the respective surfaces, via rolling and cured via an autoclaving process, for example.

The liquid crystal inclusive (e.g., PDLC) layer 214 is disposed approximately in the center of the cross-sectional stack shown in Fig. 2. Sandwiching the PDLC 214 are first and second TCO layers 212. The first and second TCO layers 212 may be of, or include, for example, ZnAlOₓ, SnOₓ:F, SnSbOₓ, or the like, in certain example embodiments. The TCO layers may be sputtered onto one or both surfaces of the PDLC 214 and/or the respective surfaces of the first and second polymer-based (e.g., PET) layers 210 that are more proximate to the PDLC 214.

First and second polymer-based layers 210 are provided between the first and second laminate layers 208 and the first and second TCO layers 212, respectively. The first and second polymer-based layers 210, the first and second laminate layers 208, and the low-E UV blocking coating 206 extend at least the width of the PDLC 214 so as to protect it.

One or more bus bars are provided, e.g., to provide voltage to the PDLC 214, either directly or indirectly. In certain example embodiments, two bus bars are respectively connected to the first and second TCO layers 212. A groove or channel is cut in each of the first and second laminate layers 208. In certain example embodiments, when viewed in cross section, the grooves may be substantially U-shaped, with the first groove being upwardly oriented and the second groove being downwardly oriented. Also, in certain example embodiments, the grooves may be disposed at opposing corners of the PDLC stack, e.g., such that the first groove is disposed in the upper left corner of the PDLC stack while the second groove is disposed in the lower right corner of the PDLC stack. Of course, it will be appreciated that the foregoing description is provided by way of example and without limitation and that other arrangements may be used in connection with certain other example embodiments (e.g., when only one bus bar is used, when differently shaped channels are formed, etc.).

Each groove may be formed by laser cutting (e.g., using a CO₂ laser), using a half-cutter, or via any suitable means. The groove is filled with a silver paste, and a flat wire ribbon is bonded thereto. Voltage may be provided through this ribbon so as to cause the PDLC 214 to become activated. The voltage may be connected to a switch (not shown) in certain example embodiments.

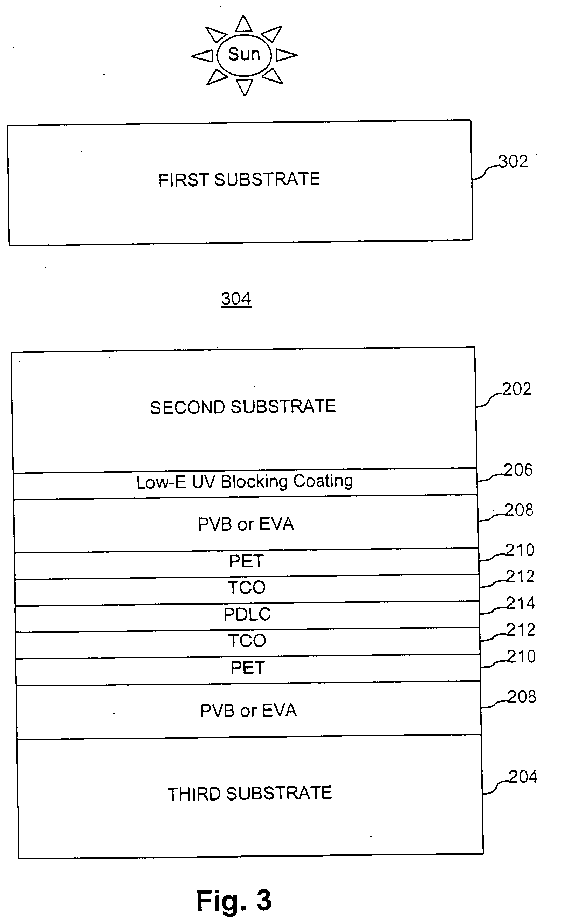

Fig. 3 is a cross-sectional view of an insulating glass (IG) window unit in accordance with an example embodiment. Fig. 3 is similar to Fig. 2. For example, the same liquid crystal inclusive (e.g., PDLC) stack of a low-E UV blocking coating 206, a first laminate layer 208, a first polymer-based (e.g., PET) layer 210, a first TCO layer 212, the PDLC 214, a second TCO layer 212, a second polymer-based (e.g., PET) layer 210, and a second laminate layer 208 are provided between second and third substrates (e.g., glass substrates) 202, 204. However, as shown in Fig. 3, a first substrate 302 (e.g., glass substrate) is located proximate to the second substrate 202. The first and second substrates 302, 202 are separated, e.g., by an air gap 304, so as to provide insulating features for the IG unit. The three substrates are substantially parallel to one another.

Thus, the example embodiment shown in and described with reference to Fig. 3 may be thought of as being a conventional IG unit, with the low-E UV blocking coating conventionally found on surface 2 of the window being moved to surface 4 of the window, along with the other elements of the PDLC stack of certain example embodiments.

Also, in connection with certain of the example IG units described herein, a low-E (and/or UV or UVA blocking) layer may be provided on surface 2 of the window (e.g., on the inner surface of the first substrate 302 proximate to the air gap 304) in certain example embodiments. This low-E layer may augment or replace the low-E UV blocking coating 206 located on the inner surface of the second substrate 202, depending on the illustrative implementation chosen.

In certain example embodiments, the periphery of the stack is left open (e.g., not sealed). However, in certain other example embodiments, a seal (e.g., a polymer-based seal) may be provided around the periphery of the window and/or at least the PDLC stack, so as to reduce the amount of water, debris, etc., from entering into the unit.

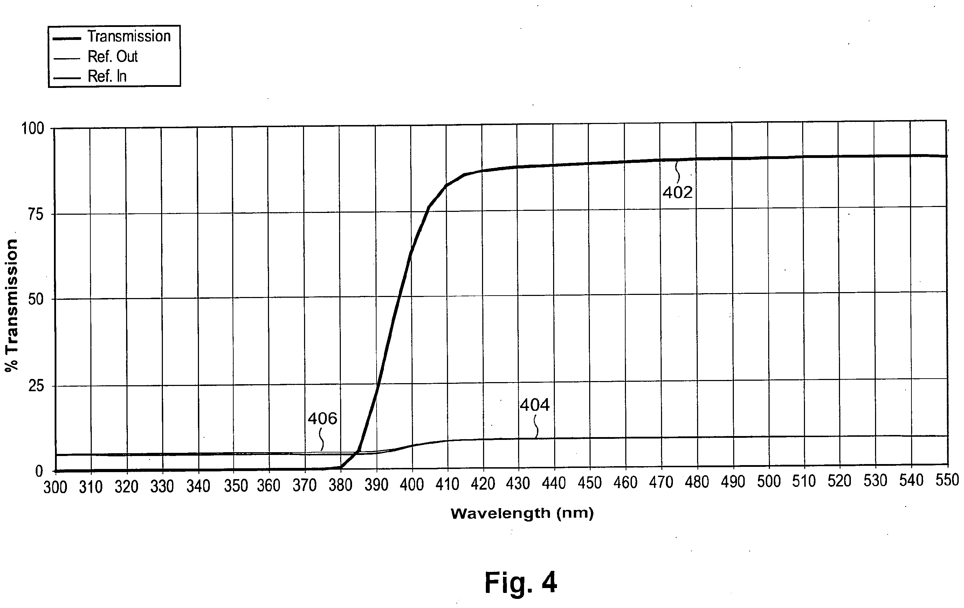

Fig. 4 is a graph of experimental data that illustrates the general ineffectiveness of the PVB in containing the UVA incidence. The graph shows the transmission of visible light (Tvis) and the reflectance of visible light (Rvis) of a full laminate with clear PVB in the 300 to 500 nm range. Light having a wavelength above about 400 nm (e.g., from about 400 nm to about 700 nm) typically is visible. The sample tested was a piece of clear glass, 1.7 mm thick. In Fig. 4, line 402 corresponds to transmission of light, line 404 corresponds to inward reflection, and line 406 corresponds to outward reflection. As can be seen from Fig. 4, about 99% of UV transmission is blocked up to about 380 nm. However, the UV transmission increases markedly thereafter. The reflection in and out is very low throughout all wavelengths. Thus, as will be appreciated from Fig. 4, the PVB alone does little to block UVA incidence and provides low inward and outward reflection (also resulting in, for example, poor insulating features and leading to one or more of the above-described and/or other drawbacks).

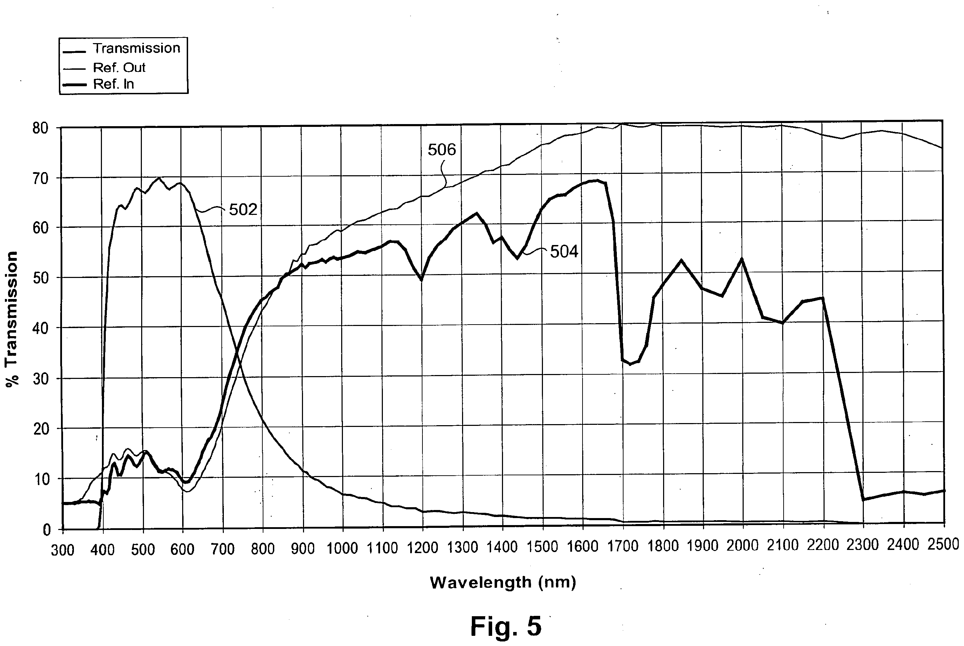

By way of contrast, Fig. 5 is a graph of experimental data that illustrates the advantages gained by ruggedizing the PDLC in accordance with an example embodiment. More particularly, Tvis and Rvis are shown for a half-laminate with a double silver low-E and UV blocking film being disposed on surface 2 of the window, in accordance with an example embodiment. The sample tested was clear glass, coated with SunGuard SN 68 and ClimaGuard SPF (both commercially available from Guardian) and incorporating a 0.030" PVB laminate layer, bringing the total thickness to about 3 mm. In Fig. 5, line 502 corresponds to transmission of light, line 504 corresponds to inward reflection, and line 506 corresponds to outward reflection. Unlike the arrangement that produced the results of Fig. 4 in which the PVB alone does not block light having a wavelength from about 380-400 nm, the arrangement of Fig. 5 and of certain example embodiments includes a low-E and UVA blocking layer that does block light having a wavelength from about 380-400 nm. There is an average of about 65% transmission between about 400 nm and 650 nm. Tvis falls rapidly until about 900 nm, and is greatly reduced above about 1300 nm. Reflection in and out range from about 5% to about 10% in the wavelength range of about 300-600 nm, and then climb markedly starting at about 600 nm. Thus, as will be appreciated from Fig. 5, substantially more UVA incidence is blocked, and Rvis is higher at substantially all wavelengths. There is also good transmission of visible light.

The following table provides additional experimental data, showing the changes in haze, E*-value, and percent of visible transmission in various test samples from "0-hour" UV exposure over a number of different UV exposure times produced according to certain example embodiments. For example, a* = a*₁-a*₀, with a*₀ being the a* value after 0 hours of UV exposure, b* = b*₁-b*₀, with b*₀ being the b* value after 0 hours of UV exposure, L* = L*₁-L*₀, with L*₀ being the L* value after 0 hours of UV exposure, etc. As can be appreciated from the table below, the samples created in accordance with certain example embodiments held-up very well in terms of changes in haze, E*-value, and percent of visible transmission, even after over 3,000 hours of UV exposure. Unless otherwise noted, the procedure for gathering the data in the table involved measuring each sample twice in the off state. Then, each sample was measured twice in the on state after waiting approximately 4 minutes. The data provided below represents the average of the two measurements. It was discovered that on state values are cyclical and do not always stabilize.

Sample 4 provides a comparative example, in that one-half of the sample did not have a UV blocking coating, whereas the other half of the sample did have a UV blocking coating. L*, a*, and b* represent transmissive measurements.

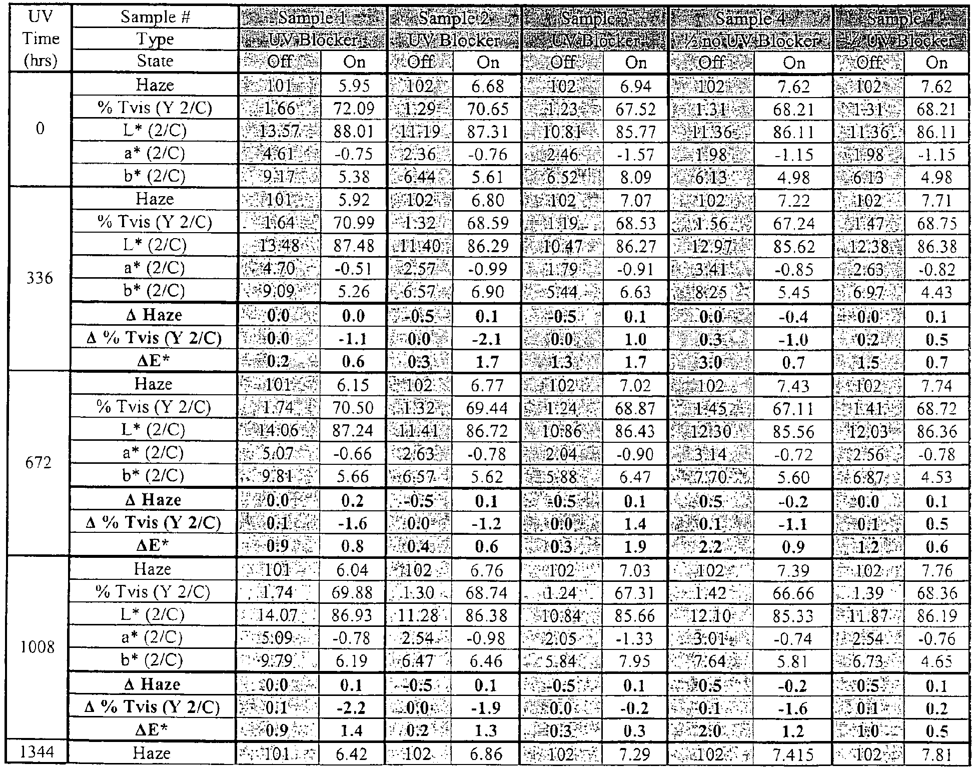

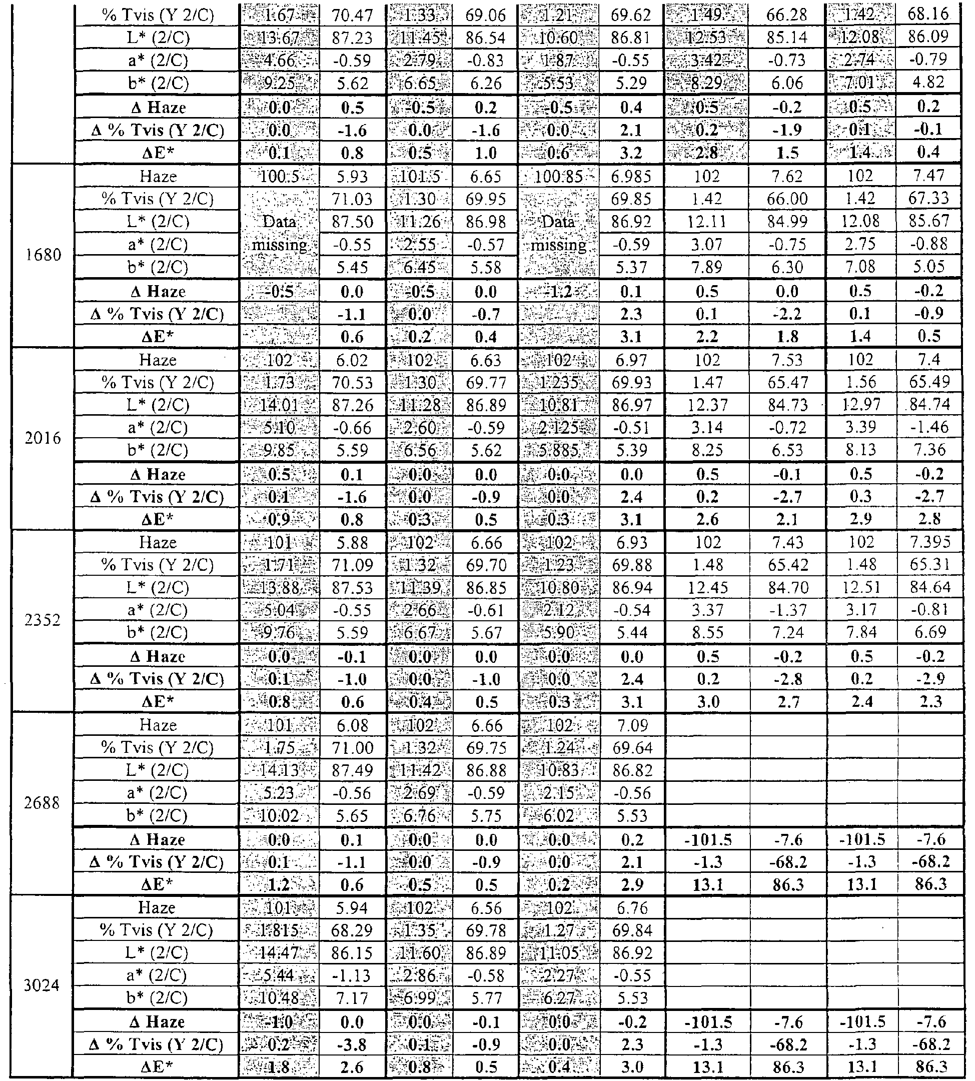

It is noted that after turning the samples to the on state, it takes about 8 minutes for the transmission measurements to re-stabilize in the off state. This was not initially noticed on samples 1, 2, and 3. Off state measurements were taken once samples stabilized. Only one set of initial data for sample 4 was gathered; therefore, it was considered baseline data for both the panel and the UV blocked side.

It will be appreciated that it is desirable to reduce the absolute values of the changes in haze, percent visible transmission, and E* values over time, for both on and off states. Thus, it is preferable to reduce the absolute value of the change in haze to below about 10, more preferably below about 5, even more preferably below about 3, even more preferably below about 2, and most preferably below about 1. Similarly, it is preferable to reduce the absolute value of the change in Tvis (when measure with the Y 2/C method) to below about 5, even more preferably below about 3, even more preferably below about 2, and most preferably below about 1. Again, it is preferable to reduce the change in E* to below about 5, even more preferably below about 3, even more preferably below about 2, and most preferably below about 1. It will be appreciated that the exposure to UV over time may affect one or both of the on and off state measurements. Thus, it may not always be possible to achieve corresponding reductions to the changes in haze, Tvis, and E*, for both the on and off states, although it is still desirable to achieve reductions to the changes in haze, Tvis, and E*, for one of the on and off states even when it is not possible to achieve corresponding results for the other state.

As noted above, there sometimes is a problem related to delamination of curved laminates with sharp edges proximate to high-stress hot-spots. To make curved laminates, certain example embodiments take into account the stiffness of the PET material being used. For example, in certain example embodiments, to attenuate the z-component of the compressive stress below 100 MPa, the PET/LC/PET layers combined may be provided at a thickness that does not exceed about 300 microns. In addition, or in the alternative, stress points may be reduced by the use of laser cutting of the raw LC material in certain example embodiments. By way of example and without limitation, the LC may be laser cut, e.g., so as to include grooves or channels. Such grooves or channels may be located on opposing sides of the stack. In addition to reducing the delamination, these and/or similar grooves also help reduce the formation of wrinkles.

Further details of an example multi-layer low-E UV blocking coating that may be used in connection with certain example embodiments is now provided. Certain example low-E UV blocking coatings may include a layer stack that may permit the coated article to achieve one or more of high selectivity (Tᵥᵢₛ/SF), a fairly low solar factor (SF), substantially neutral color at normal and/or off-axis viewing angles, and/or low emissivity. One, two, three, or all of these features may be achieved in different embodiments of this invention. When high selectivity (Tᵥᵢₛ/SF) is achieved, there is provided a high ratio of visible transmission (Tᵥᵢₛ) to solar factor (SF), which will be appreciated by those skilled in the art as being an indication of a combination of good visible transmission and good solar protection of a building and/or vehicle interior for example.

In certain example embodiments of this invention, a coated article such as an IG window unit (e.g., with two spaced apart glass substrates) realizes a high selectivity (Tᵥᵢₛ/SF) of at least 1.75, more preferably of at least 1.80, even more preferably of at least 1.85, and sometimes at least 1.90. In certain example embodiments of this invention, coated articles realize a high selectivity value, in combination with a SF of no greater than 35.0, and more preferably a SF of no greater than 34.0, even more preferably a SF of no greater than 33.0, and most preferably a SF of no greater than 32.5 (SF, or g-value, is calculated in accordance with DIN 67507). This permits coated articles, for example, to realize good selectivity while at the same time blocking significant undesirable radiation from reaching a building interior or the like.

In certain example embodiments of this invention, a coated article is provided which has both high selectivity and desirable coloration at both normal and off-axis viewing angles such as 45 degrees from normal. Moreover, in certain example embodiments, the coloration of the coated article does not shift by more than a predetermined amount between a normal viewing angle and an off-axis viewing angle of 45 degrees for example.

In certain example embodiments of this invention, coated articles realize a visible transmission of from about 50 to 70%, more preferably from about 55 to 65%, and most preferably from about 58 to 64% in a monolithic and/or IG unit context.

Sheet resistance (Rₛ) is indicative of emissivity or emittance. Low sheet resistance is achieved in certain example embodiments of this invention. In certain example embodiments of this invention, a coated articles realizes a sheet resistance (Rₛ) of no greater than about 3.0 ohms/square, more preferably no greater than about 2.0 ohms/square, and most preferably no greater than about 1.9 ohms/square before any optional heat treatment such as tempering. Such low sheet resistance values are indicative of low emissivity.

In certain example embodiments of this invention, the low-E coating of a coated article includes only two IR reflecting layers (e.g., only two silver or silver-based layers). While other numbers of IR reflecting layers may sometimes be provided, the use of two is preferable in certain instances in that low-emittance can be achieved and more such layers are not required thereby making coatings easier and cost effective to manufacture and less susceptible to yield problems.

In certain example embodiments of this invention, an IR reflecting layer is located between respective lower and upper contact layers, each of which contacts the IR reflecting layer. The contact layers may be made of material(s) such as an oxide of nickel-chrome (NiCrOₓ) in certain example embodiments of this invention. In certain embodiments, the lower contact layer is of the sub-oxide type, whereas the upper contact layer is more oxided than is the lower contact layer. Surprisingly and unexpectedly, it has been found that by using a sub-oxide contact layer under and contacting the IR reflecting layer and a more oxided contact layer over the IR reflecting layer, significantly higher selectivity values and lower SF values may be achieved in combination with desirable coloration at normal and/or off-axis viewing angles. These represent significant example advantages in the art.

Figs. 6 and 7 are example multi-layer low-E UV blocking coatings that may be used in connection with certain example embodiments. The coated article includes substrate 202 (e.g., clear, green, bronze, or blue-green glass substrate from about 1.0 to 10.0 mm thick, more preferably from about 1.0 mm to 7.0 mm thick), and coating (or layer system) 600 provided on the substrate 202 either directly or indirectly. The coating (or layer system) 600 includes: dielectric titanium oxide layer 601 which may be TiOₓ (e.g., where x is from 1.5 to 2.0), first lower contact layer 603 (which contacts IR reflecting layer 605), first conductive and preferably metallic infrared (IR) reflecting layer 605, first upper contact layer 607 (which contacts layer 605), dielectric layer 609 (which may be deposited in one or multiple steps in different embodiments of this invention), dielectric layer 615 may be of or include zinc oxide, second conductive and preferably metallic IR reflecting layer 619, second upper contact layer 621 (which contacts layer 619), dielectric layer 623, and finally protective dielectric layer 625. The "contact" layers 603, 607, and 621 each contact at least one IR reflecting layer (e.g., layer based on Ag, Au, or the like). The aforesaid layers 601-625 make up low-E coating 600 which is provided on glass or plastic substrate 202.

To improve the low-E coating 600 of Fig. 6 and/or the low-E coating 700 of Fig. 7 to provide enhanced UV blocking features (e.g., blockage of light having a wavelength in the range of about 380-400 nm), additional layers may be added to the stack. For example, in Fig. 6, dielectric layer 609 may be "split" and an additional UV blocking layer 611 may be added (e.g., between successive layers of the dielectric layer 609). That is, at least some of dielectric layer 609 may be deposited, the UV blocking layer 611 may be deposited, and then the rest of the dielectric layer 609 may be deposited. The UV blocking layer may be of or include zinc oxide doped with bismuth (e.g., ZnBiO or other suitable stoichiometry) or simply bismuth oxide (BiO) in certain example embodiments. In certain other example embodiments, the UV blocking layer 611 may include silver oxide (e.g., AgOₓ or other suitable stoichiometry), as described, for example, in U.S. Patent No. 6,596,399,. Similarly, in Fig. 7, the dielectric layer 623 may be split and the UV blocking layer 611 may be inserted therein. In still other example embodiments, a UV blocking layer 611 surrounded by dielectric layers (e.g., of tin oxide) may be located anywhere in the low-E stack.

The improved low-E UV blocking stacks 600 and 700 thus are capable of blocking both UV and IR.

Further details of low-E coatings and stacks may be found, for example, in U.S. Patent Nos. 7,198,851 or 7,189,458 or U.S. Publication No. 2005/0164015. For example, dielectric layer 601 may be of or include titanium oxide in certain example embodiments of this invention. This layer is provided for anti-reflective purposes, and preferably has an index of refraction (n) of from about 2.0 to 2.6, more preferably from about 2.2 to 2.5. Layer 601 may be provided in direct contact with the glass substrate 202 in certain example embodiments of this invention, or alternatively other layer(s) may be provided between the substrate 202 and layer 601 in certain instances.

Infrared (IR) reflecting layers 605 and 619 are preferably substantially or entirely metallic and/or conductive, and may comprise or consist essentially of silver (Ag), gold, or any other suitable IR reflecting material. IR reflecting layers 605 and 619 help allow the coating to have low-E and/or good solar control characteristics. The IR reflecting layers 605 and/or 619 may, however, be slightly oxidized in certain embodiments of this invention.

Contact layers 607 and 621 may be of or include nickel (Ni) oxide, chromium/chrome (Cr) oxide, or a nickel alloy oxide such as nickel chrome oxide (NiCrOₓ), or other suitable material(s), in certain example embodiments of this invention. The use of, for example, NiCrOₓ in these layers (607 and/or 621) allows durability to be improved. These contact layers may or may not be continuous in different embodiments of this invention across the entire IR reflecting layer.

In certain example embodiments of this invention, the upper contact layers 607 and/or 621 that are located above the respective IR reflecting layers 605 and 619 are deposited in a manner so as to be oxided to a first extent. In certain example embodiments, the upper contact layers 607 and/or 621 may be substantially fully oxided.

Surprisingly, it has been found that by using an optional sub-oxide contact layer under and contacting the IR reflecting layer 619 and a more oxided contact layer 621 over the IR reflecting layer 619, significantly higher selectivity values and lower SF values can be achieved in combination with desirable coloration at normal and/or off-axis viewing angles. In particular, it has been found that unexpected advantages can be achieved when the optional contact layer under the IR reflecting layer 619 is deposited in a manner so as to be oxided to a lesser extent than upper contact layer 621 on the other side of the IR reflecting layer 619. In certain example embodiments, the optional contact layer an the contact layer 621 may be composed of oxides of the same metal(s), yet be oxided to different extents where the optional lower contact layer is oxided to a lesser extent than is the upper contact layer 621. For example, in certain example embodiments of this invention, the optional lower NiCrOₓ contact layer is a sub-oxide (i.e., only partially oxided) whereas upper NiCrOₓ contact layer 621 is substantially fully oxided as deposited by sputtering or the like.

In certain example embodiments of this invention, as deposited and/or in the final product which is not thermally tempered in certain embodiments, the optional sub-oxide contact layer may have no more than about 80% of the oxygen content of the upper contact layer 621, more preferably no more than about 70% of the oxygen content of the upper contact layer 621, and most preferably no more than about 60% of the oxygen content of the upper contact layer 621. In each of these cases, as well as others, it will be appreciated that the lower contact layer 617 under the IR reflecting layer 619 is oxided to a lesser extent than is the upper contact layer 621 located over the IR reflecting layer 619 in at least certain portions of the respective contact layers.

In order to deposit the optional sub-oxide contact layer in a manner so as to be less oxided than upper contact layer 621, even when they are oxides of the same metal(s) such as Ni and/or Cr, less oxygen gas flow per kW of sputtering power may be used in sputtering the optional layer compared to layer 621. For example, given similar or the same type of sputtering target(s) (e.g., using NiCr based targets for each layer), an oxygen gas flow of about 5 ml/kW may be used when sputtering the optional sub-oxide lower contact layer, whereas an oxygen gas flow of about 10 ml/kW may be used when sputtering substantially fully oxided upper contact layer 621 (the remainder of the gas flows may be made up of Ar or the like). In this particular example, the oxygen gas flow per kW of sputtering power for the optional sub-oxide layer is about 50% of that for the more oxided upper contact layer 621. In certain example embodiments of this invention, the oxygen gas flow per kW of sputtering power for the optional sub-oxide layer is no more than about 80% of that used for the upper more oxided contact layer 621, more preferably no more than about 70% of that used for the upper more oxided contact layer 621, and even more preferably no more than about 60% of that used for the upper more oxided contact layer 621.

In certain example embodiments of this invention, the upper contact layers 607 and 621 provided over the respective IR reflecting layers may be deposited in similar or the same manners.

Lower contact layer 603 and/or dielectric layer 615 in certain embodiments of this invention are of or include zinc oxide (e.g., ZnO). The zinc oxide of layer(s) 603, 615 may contain other materials as well such as Al (e.g., to form ZnAlOₓ). For example, in certain example embodiments of this invention, one or more of zinc oxide layers 603, 615 may be doped with from about 1 to 10% Al, more preferably from about 1 to 5% Al, and most preferably about 2 to 4% Al. The use of zinc oxide 603 under the silver 605 allows for an excellent quality of silver to be achieved.

Dielectric layer 609 may be of or include tin oxide in certain example embodiments of this invention. However, as with other layers herein, other materials may be used in different instances. Dielectric layer 623 may be of or include tin oxide in certain example embodiments of this invention. However, layer 623 is optional and need not be provided in certain example embodiments of this invention. Dielectric layer 625, which may be an overcoat including one or more layers in certain example instances, may be of or include silicon nitride (e.g., Si₃N₄) or any other suitable material in certain example embodiments of this invention. Optionally, other layers may be provided above layer 625. For example, an overcoat layer of or including zirconium oxide (not shown) may be formed directly on top of the silicon nitride layer 625 in certain example embodiments of this invention. Silicon nitride layer 625 may be doped with Al or the like in certain example embodiments of this invention.

Other layer(s) below or above the illustrated coating may also be provided. Thus, while the layer system or coating is "on" or "supported by" substrate 202 (directly or indirectly), other layer(s) may be provided therebetween. Thus, for example, the coating of Fig. 6 may be considered "on" and "supported by" the substrate 202 even if other layer(s) are provided between layer 601 and substrate 202. Moreover, certain layers of the illustrated coating may be removed in certain embodiments, while others may be added between the various layers or the various layer(s) may be split with other layer(s) added between the split sections in other embodiments of this invention without departing from certain embodiments of this invention. Thus, the use of the word "on" herein is not limited to being in direct contact with.

Certain example embodiments incorporate the illustrate layers described herein so that no more than about 20% of light having a wavelength of about 380-400 nm reaches the PDLC layer. Preferably, less than about 15% of light having a wavelength of about 380-400 nm reaches the PDLC layer. Still more preferably less than about 10%, and most preferably less than about 5%, of light having a wavelength of about 380-400 nm reaches the PDLC layer. Certain example embodiments incorporate the illustrate layers described herein so that the visible transmission of light is at least about 55%, more preferably at least about 60%, still more preferably at least about 65%, and most preferably at least about 70%.

PVB laminates tend to be more resistant to impact. However, in certain example instances, PVB laminates sometimes allow the LC layer to move inwards, degrading the performance and/or appearance of the overall structure. Thus, in certain example embodiments, a polymer (e.g., of an acrylic or an amide) may be provided at the periphery (e.g., proximate, although not necessarily limited, to the edges) of the PDLC film. This polymer may act as barrier, reducing migration of the PVB plasticizer, and reducing the chances of the LC being pushed inwards. Thus, certain example embodiments may include a polymer barrier proximate to the periphery of the PDLC film so as to reduce migration of the PVB and/or movement of the LC layer. It will be appreciated that although the movement of the LC inwards is a problem associated with PVB, a polymer barrier may be used in connection with other laminates.

Although certain example embodiments have been described in relation to various applications, the present invention is not limited thereto. The techniques of certain example embodiments may be applied to any glass and/or window-like application, such as, for example, vehicle windshields, sunroofs, interior and/or exterior windows, IG units, etc.

Also, the features, aspects, advantages, and example embodiments described herein may be combined to realize yet further embodiments.

While the invention has been described in connection with what is presently considered to be the most practical and preferred embodiment, it is to be understood that the invention is not to be limited to the disclosed embodiment, but on the contrary, is intended to cover various modifications included within the scope of the appended claims.

## Claims

1. A window comprising:
an inner substrate (204) and an outer substrate (202), the inner and outer substrates being substantially parallel to one another;
a multi-layer low-E ultraviolet (UV) blocking coating (206) supported by an inner surface of the outer substrate (202), the low-E UV blocking coating (206) blocking significant amounts of UV in the range of from about 380-400 nm;
a liquid crystal inclusive layer (214) disposed between at least the inner and outer substrates;
first and second substantially transparent conductive layers (212), the first and second substantially transparent conductive layers (212) being provided between the liquid crystal inclusive layer (214) and the outer (202) and inner (204) substrates, respectively;
first and second polymer inclusive laminating layers (208), the first laminating layer provided between at least the liquid crystal inclusive layer and the outer substrate and the second laminating layer provided between at least the liquid crystal inclusive layer and the inner substrate; **characterized in that**
at least one bus bar in electrical communication with the first and/or second transparent conductive layer(s) so as to cause the liquid crystal inclusive layer to become activated when a voltage is applied thereto; and
wherein the multi-layer low-E UV blocking coating comprises at least one IR reflecting layer and at least one UV blocking layer so that no more than about 20% of ambient light having a wavelength of from 380-400 nm reaches the liquid crystal inclusive layer,
wherein the coated article has a visible transmission of at least about 55% when the liquid crystal inclusive layer is activated, and
the UV blocking layer (611) comprises bismuth oxide,
wherein at least part of the window is laser cut so as to include one or more grooves or channels, the grooves or channels being formed so as to attenuate a z-component of compressive stress below 100 MPa.

2. The window of claim 1, wherein the inner and outer substrates (202, 204) are glass substrates, and wherein the liquid crystal inclusive layer (214) comprises PDLC.

3. The window of claim 1, wherein the first and second transparent conductive layers (212) comprise transparent conductive oxides, namely preferably each one or more of: zinc oxide, tin oxide and/or indium-tin-oxide.

4. The window of claim 1, wherein the low-E UV blocking coating includes at least two IR reflecting layers comprising silver.

5. The window of claim 1, wherein the multi-layer low-E UV blocking coating (206) is arranged so that no more than about 15%, preferably no more than about 10% and most preferably no more than about 5% of ambient light having a wavelength of about 380-400 nm reaches the liquid crystal inclusive layer.

6. An insulating glass window unit, comprising:
at least first (302), second (202) and third (204) substantially parallel substrates;
a multi-layer low-E UV blocking coating (206) supported by a surface of the second substrate (202) facing the third substrate (204);
a liquid crystal inclusive layer (214) disposed between the second and third substrates;
first and second transparent conductive layers (212), the first and second transparent conductive layers (212) being provided between at least the liquid crystal inclusive layer (214) and the second (202) and third (204) substrates, respectively;
wherein the first (302) and second substrates (202) are spaced apart from each other, **characterized in that**
at least one bus bar electrically connected to the first and/or second transparent conductive layer(s) (212) so as to cause the liquid crystal inclusive layer (214) to become activated when at least a predetermined voltage is applied to the bus bar,
wherein the multi-layer low-E UV blocking coating (206) comprises at least one UV blocking layer in order to block significant amounts of UV radiation in the range of from 380-400 nm so that no more than about 20%, preferably no more than about 15%, of ambient light having a wavelength of from 380-400 nm reaches the liquid crystal inclusive layer, and
wherein the insulating glass unit has a visible transmission of at least about 50% when the liquid crystal inclusive layer is activated, and
wherein the UV blocking layer (611) comprises bismuth oxide.

7. The insulating glass unit of claim 6, wherein the first (302), second (202) and third (204) substrates are glass substrates.

8. The insulating glass unit of claim 6, wherein the first and second transparent conductive layers (212) comprise one or more of zinc oxide and tin oxide.

9. The insulating glass unit of claim 6, wherein the low-E UV blocking coating (206) includes at least one IR reflecting layer comprising silver, the IR reflecting comprising silver not directly contacting the UV blocking layer of the coating.

10. The insulating glass unit of claim 1 or 6, wherein the low-E UV blocking coating (206) has at least 99.5% UV cut-off below about 410 nm.

11. The insulating glass unit of claim 6, wherein the UV blocking layer comprises in addition silver oxide.

12. A coated article including a low-E coating (700) supported by a substrate (202), the low-E coating comprising:
first (605) and second (619) IR reflecting layers comprising silver and/or gold;
at least one UV blocking layer; wherein said UV blocking layer (611) is positioned so as to not directly contact the first (605) and second (619) IR reflecting layers; **characterized in that**
said at least one UV blocking layer (611) blocks significant amounts of UV light having a wavelength of from 380-400 nm so that no more than about 20% of light having a wavelength of from 380-400 passes through the low-E coating; and
wherein the UV blocking layer (611) comprises bismuth oxide or zinc oxide doped with bismuth, and wherein the coated article further comprises a first dielectric layer (609; 615) provided between the UV blocking layer (611) and the first (605) IR reflecting layer, and a second dielectric layer (623) provided between the UV blocking layer (611) and the second IR reflecting layer (619), wherein the UV blocking layer (611) is surrounded by the dielectric layers (609; 623).

## Patentansprüche

1. Ein Fenster, umfassend:
ein inneres Substrat (204) und ein äußeres Substrat (202), das innere und äußere Substrat sind im Wesentlichen parallel zueinander angeordnet;
eine mehrschichtige, Low-E ultraviolett (UV)-blockierende Beschichtung (206), getragen von einer inneren Oberfläche des äußeren Substrats (202), wobei die Low-E UV-blockierende Beschichtung (206) signifikante Mengen der UV-Strahlung im Bereich von etwa 380-400 nm blockiert;
eine Flüssigkristall umfassende Schicht (214), angeordnet zwischen mindestens den inneren und äußeren Substraten;
erste und zweite, im Wesentlichen transparente, leitfähige Schichten (212), wobei die erste und zweite im Wesentlichen transparente leitfähige Schicht (212) jeweils mindestens zwischen der Flüssigkristall umfassenden Schicht (214) und dem äußeren (202) beziehungsweise inneren (204) Substrat angeordnet ist;
erste und zweite Polymer umfassende Laminatschichten (208), wobei die erste Laminatschicht zwischen mindestens der Flüssigkristall umfassenden Schicht und dem äußeren Substrat und die zweite Laminatschicht zwischen mindestens der Flüssigkristall umfassenden Schicht und dem inneren Substrat bereitgestellt wird; **gekennzeichnet dadurch, dass**
mindestens eine Stromleitung in elektrischer Kommunikation mit der ersten und/oder zweiten transparenten leitfähigen Schicht steht, so dass die Flüssigkristall umfassende Schicht aktiviert wird, wenn eine Spannung angelegt wird; und
wobei die mehrschichtige Low-E UV-blockierende Beschichtung mindestens eine IR-Reflexionsschicht und mindestens eine UV-blockierende Schicht umfasst, so dass nicht mehr als etwa 20% des Umgebungslichts mit einer Wellenlänge von 380-400 nm die Flüssigkristall umfassende Schicht erreicht,
wobei der beschichtete Gegenstand eine Durchlässigkeit sichtbaren Lichts von mindestens etwa 55% bei aktivierter Flüssigkristallschicht hat und die UV-blockierende Beschichtung (611) Bismutoxid umfasst,
wobei mindestens ein Teil des Fensters lasergeschnitten ist, um eine oder mehrere Nuten oder Kanäle umfassen, wobei die Nuten oder Kanäle so geformt sind, dass sie eine Z-Komponente der Druckspannung unter 100 MPa dämpfen.

2. Das Fenster nach Anspruch 1, wobei die inneren und äußeren Substrate (202, 204) Glassubstrate sind, und wobei die Flüssigkristall umfassende Schicht (214) PDLC umfasst.

3. Das Fenster nach Anspruch 1, wobei die erste und zweite transparente leitfähige Schicht (212) transparente, leitfähige Oxide umfasst, vorzugsweise jeweils eines oder mehrere von: Zinkoxid, Zinnoxid und/oder Indium-Zinn-Oxid.

4. Das Fenster nach Anspruch 1, wobei die Low-E UV-blockierende Beschichtung mindestens zwei IR-reflektierende Schichten enthält, die Silber umfassen.

5. Das Fenster nach Anspruch 1, wobei die mehrschichtige Low-E UV-blockierende Beschichtung (206) so vorgesehen ist, dass nicht mehr als etwa 15%, vorzugsweise nicht mehr als etwa 10% und bestenfalls nicht mehr als etwa 5% des Umgebungslichts mit einer Wellenlänge von etwa 380-400 nm die Flüssigkristall umfassende Schicht erreicht.

6. Eine Isolierglas-Fenstereinheit, umfassend:
mindestens erste (302), zweite (202) und dritte (204) im Wesentlichen parallele Substrate;
eine mehrschichtige Low-E UV-blockierende Beschichtung (206), die von einer Oberfläche des zweiten Substrates (202) getragen wird und dem dritten Substrat (204) zugewandt ist;
eine Flüssigkristall umfassende Schicht (214), die zwischen dem zweiten und dritten Substrat angeordnet ist;
erste und zweite transparente leitfähige Schichten (212), wobei die erste und zweite im Wesentlichen transparente leitfähige Schicht (212) mindestens jeweils zwischen der Flüssigkristall umfassenden Schicht (214) und dem zweiten (202) beziehungsweise dritten (204) Substrat angeordnet ist;
wobei das erste (302) und das zweite Substrat (202) voneinander beabstandet sind, **gekennzeichnet dadurch, dass**
mindestens eine Stromleitung an die erste und/oder zweite transparenten leitfähige Schicht (212) elektrisch angeschlossen ist, so dass die Flüssigkristall umfassende Schicht (214) aktiviert wird, wenn mindestens eine vordefinierte Spannung an die Stromleitung angelegt wird; und
wobei die mehrschichtige Low-E UV-blockierende Beschichtung (206) mindestens eine UV-blockierende Schicht umfasst, die signifikante Mengen der UV-Strahlung im Bereich zwischen 380-400 nm blockiert, so dass nicht mehr als etwa 20%, vorzugsweise nicht mehr als etwa 15%, des Umgebungslichts mit einer Wellenlänge von 380-400 nm die Flüssigkristall umfassende Schicht erreicht, und
wobei die Isolierglaseinheit eine Durchlässigkeit sichtbaren Lichts von mindestens etwa 50% hat, wenn die Flüssigkristall umfassende Schicht aktiviert ist, und
wobei die UV-blockierende Schicht (611) Bismutoxid umfasst.

7. Die Isolierglaseinheit nach Anspruch 6, wobei die ersten (302), zweiten (202) und dritten (204) Substrate Glassubstrate sind.

8. Die Isolierglaseinheit nach Anspruch 6, wobei die erste und zweite transparente leitfähige Schicht (212) eines oder mehrere von Zinkoxid und Zinnoxid umfasst.

9. Die Isolierglaseinheit nach Anspruch 6, wobei die Low-E UV-blockierende Beschichtung (206) mindestens eine IR-Reflexionsschicht enthält, die Silber umfasst, wobei die IR-Reflexionsschicht, die Silber umfasst, die UV-blockierenden Beschichtung nicht direkt kontaktiert.

10. Die Isolierglaseinheit nach Anspruch 1 oder 6, wobei die Low-E UV-blockierende Beschichtung (206) unterhalb von etwa 410 nm einen UV-Grenzwert von mindestens 99,5% hat.

11. Die Isolierglaseinheit nach Anspruch 6, wobei die UV-blockierende Beschichtung zusätzlich Silberoxid umfasst.

12. Ein beschichteter Gegenstand mit einer Low-E-Beschichtung (700), die von einem Substrat (202) getragen wird, wobei die Low-E-Beschichtung umfasst:
erste (605) und zweite (619) IR-reflektierende Schichten, die Silber und/oder Gold umfassen;
mindestens eine UV-blockierende Schicht; wobei die UV-blockierende Schicht (611) so positioniert ist, dass sie die erste (605) und zweite (619) IR-Reflexionsschicht nicht direkt berührt; **dadurch gekennzeichnet, dass**
die mindestens eine UV-blockierende Schicht (611) signifikante Mengen des UV-Lichts mit einer Wellenlänge von 380-400 nm blockiert, so dass nicht mehr als etwa 20% des Lichts mit einer Wellenlänge von 380-400 die Low-E Beschichtung durchquert; und
wobei die UV-blockierende Schicht (611) Bismutoxid oder Zinkoxid, angereichert mit Bismut, umfasst, und wobei der beschichtete Gegenstand ferner eine erste dielektrische Schicht (609; 615), bereitgestellt zwischen der UV-blockierenden Schicht (611) und der ersten (605) IR-Reflexionsschicht, und eine zweiten dielektrischen Schicht (623), bereitgestellt zwischen der UV-blockierenden Schicht (611) und der zweiten (619) IR-Reflexionsschicht umfasst, wobei die UV-blockierende Schicht (611) von den dielektrischen Schichten (609; 623) umgeben ist.

## Revendications

1. Fenêtre comprenant :
un substrat intérieur (204) et un substrat extérieur (202), le substrat intérieur et le substrat extérieur étant sensiblement parallèles l'un à l'autre ;
un revêtement (206) multicouche à faible émissivité bloquant les ultraviolets (UV), supporté par la surface intérieure du substrat extérieur (202), le revêtement (206) à faible émissivité bloquant les UV bloquant des quantités importantes d'UV dans la gamme d'environ 380 à 400 nm ;
une couche (214) contenant des cristaux liquides, disposée entre au moins le substrat intérieur et le substrat extérieur ;
une première et une deuxième couche conductrice (212) sensiblement transparentes, les première et deuxième couches conductrices (212) sensiblement transparentes étant prévues entre la couche (214) contenant des cristaux liquides et respectivement le substrat extérieur (202) et le substrat intérieur (204) ;
une première et une deuxième couche stratifiées (208) contenant un polymère, la première couche stratifiée étant prévue entre au moins la couche contenant des cristaux liquides et le substrat extérieur, et la deuxième couche stratifiée étant prévue entre au moins la couche contenant des cristaux liquides et le substrat intérieur ; **caractérisée en ce que**
au moins une barre omnibus en communication électrique avec la première et/ou avec la deuxième couche conductrice transparente de façon à faire en sorte que la couche contenant des cristaux liquides devienne activée quand une tension y est appliquée ; et
le revêtement multicouche à faible émissivité bloquant les UV comprenant au moins une couche réfléchissant les IR et au moins une couche bloquant les UV, de telle sorte que le pourcentage de lumière ambiante ayant une longueur d'onde de 380 à 400 nm qui atteint la couche contenant des cristaux liquides ne soit pas supérieur à environ 20 %,
l'article revêtu présentant un facteur de transmission dans le visible d'au moins environ 55 % après activation de la couche contenant des cristaux liquides, et
la couche (611) bloquant les UV comprenant de l'oxyde de bismuth,
au moins une partie de la fenêtre étant découpée au laser de façon à comprendre une ou plusieurs rainures ou un ou plusieurs canaux, les rainures ou les canaux étant formés de façon à abaisser en dessous de 100 MPa la composante z de la contrainte de compression.

2. Fenêtre selon la revendication 1, dans laquelle le substrat intérieur et le substrat extérieur (202, 204) sont des substrats en verre, et la couche (214) contenant des cristaux liquides comprend du PDLC.

3. Fenêtre selon la revendication 1, dans laquelle la première et la deuxième couche conductrice transparente (212) comprennent des oxydes conducteurs transparents, à savoir de préférence un ou plusieurs de chacun des oxydes suivants : oxyde de zinc, oxyde d'étain et/ou oxyde d'indium-étain.

4. Fenêtre selon la revendication 1, dans laquelle le revêtement à faible émissivité bloquant les UV contient au moins deux couches réfléchissant les IR comprenant de l'argent.

5. Fenêtre selon la revendication 1, dans laquelle le revêtement multicouche (206) à faible émissivité bloquant les UV est disposé de façon que le pourcentage de lumière ambiante ayant une longueur d'onde d'environ 380 à 400 nm atteignant la couche contenant des cristaux liquides ne soit pas supérieur à environ 15 %, de préférence ne soit pas supérieur à environ 10 % et tout spécialement ne soit pas supérieur à environ 5%.

6. Unité de fenêtre à vitrage isolant, comprenant :
au moins un premier (302), un deuxième (202) et un troisième (204) substrat sensiblement parallèles ;
un revêtement multicouche (206) à faible émissivité bloquant les UV, supporté par une surface du deuxième substrat (202) en regard du troisième substrat (204) ;
une couche (214) contenant des cristaux liquides, disposée entre le deuxième et le troisième substrat ;
une première et une deuxième couche conductrices transparentes (212), la première et la deuxième couche conductrices transparentes (212) étant disposées entre au moins la couche (214) contenant des cristaux liquides et respectivement le deuxième (202) et le troisième (204) substrat ;
le premier substrat (302) et le deuxième substrat (202) étant espacés l'un de l'autre, **caractérisé en ce que**
au moins une barre omnibus est électriquement connectée à la première et/ou à la deuxième couche conductrice transparente (212) de façon à faire en sorte que la couche (214) contenant des cristaux liquides devienne activée quand au moins une tension prédéterminée est appliquée à la barre omnibus,
le revêtement multicouche (206) à faible émissivité bloquant les UV comprend au moins une couche bloquant les UV afin de bloquer des quantités importantes de rayonnement UV dans la plage de 380 à 400 nm, de façon que le pourcentage de lumière ambiante ayant une longueur d'onde de 380 à 400 nm atteignant la couche contenant des cristaux liquides ne soit pas supérieur à environ 20 %, de préférence ne soit pas supérieur à environ 15 %, et
le vitrage isolant présentant un facteur de transmission dans le visible d'au moins environ 50 % quand la couche contenant des cristaux liquides est activée, et
la couche (611) bloquant les UV comprenant de l'oxyde de bismuth.

7. Unité de fenêtre à vitrage isolant selon la revendication 6, dans laquelle le premier substrat (302), le deuxième substrat (202) et le troisième substrat (204) sont des substrats en verre.

8. Unité de fenêtre à vitrage isolant selon la revendication 6, dans laquelle la première et la deuxième couche conductrices transparentes (212 comprennent de l'oxyde de zinc et/ou de l'oxyde d'étain.

9. Unité de fenêtre à vitrage isolant selon la revendication 6, dans laquelle le revêtement (206) à faible émissivité bloquant les UV contient au moins une couche réfléchissant les IR contenant de l'argent, la couche réfléchissant les IR contenant de l'argent n'étant pas directement en contact avec la couche bloquant les UV du revêtement.

10. Unité de fenêtre à vitrage isolant selon la revendication 1 ou 6, dans laquelle le revêtement (206) à faible émissivité bloquant les UV présente une longueur d'onde de coupure des UV à 99,5 % inférieure à environ 410 nm.

11. Unité de fenêtre à vitrage isolant selon la revendication 6, dans laquelle la couche bloquant les UV comprend en outre de l'oxyde d'argent.

12. Article revêtu contenant un revêtement (700) à faible émissivité supporté par un substrat (202), le revêtement à faible émissivité comprenant :
une première (605) et une deuxième (619) couche réfléchissant les IR comprenant de l'argent et/ou de l'or ;
au moins une couche bloquant les UV ; ladite couche (611) bloquant les UV étant positionnée de façon à ne pas être directement en contact avec la première (615) et la deuxième (619) couche réfléchissant les IR ; **caractérisé en ce que**
ladite au moins une couche (611) bloquant les UV bloque des quantités importantes de lumière UV ayant une longueur d'onde de 380 à 400 nm, de telle sorte que la quantité de lumière ayant une longueur d'onde de 380 à 400 nm et traversant le revêtement à faible émissivité ne soit pas supérieure à environ 20 % ; et
dans laquelle la couche (611) bloquant les UV comprend de l'oxyde de bismuth ou de l'oxyde de zinc dopé par du bismuth, et dans laquelle l'article revêtu comprend en outre une première couche diélectrique (609 ; 615) disposée entre la couche (611) bloquant les UV et la première (605) couche réfléchissant les IR, et une deuxième couche diélectrique (623) disposée entre la couche (611) bloquant les UV et la deuxième couche (619) réfléchissant les IR, la couche (611) bloquant les UV étant entourée par les couches diélectriques (609 ; 623).
